# EUROPEAN PATENT SPECIFICATION

(11) **EP 3 617 159 B1**
(45) Date of publication and mention of the grant of the patent: **23.07.2025**
(21) Application number: 18790742.3
(22) Date of filing: 11.04.2018
(51) Int. Cl.: C03B 20/00, C03C 3/06, G02B 1/00

(54) **METHOD FOR MANUFACTURING ULTRAVIOLET-RESISTANT QUARTZ GLASS AND ITS USE**
HERSTELLUNGSVERFAHREN FÜR UV-BESTÄNDIGES QUARZGLAS SOWIE VERWENDUNG
PROCÉDÉ DE FABRICATION DE VERRE DE QUARTZ RÉSISTANT AUX ULTRAVIOLETS ET SON UTILISATION

(30) Priority: 26.04.2017 JP 2017086764; 24.01.2018 JP 2018009919
(43) Date of publication of application: 04.03.2020
(73) Proprietor: TOSOH SGM CORPORATION, Yamaguchi 746-0006 (JP)
(72) Inventor: HORIKOSHI Hideharu, Shunan-shi Yamaguchi 746-0006 (JP)
(74) Representative: Colombo, Stefano Paolo
(86) International application number: PCT/JP2018/015233
(87) International publication number: WO 2018/198774

(56) References cited:
- EP-A1- 2 070 883
- JP-A- 2002 053 331
- JP-A- 2002 201 031
- JP-A- 2004 217 506
- JP-A- 2006 008 452
- JP-A- 2009 023 898
- JP-A- 2010 229 029
- JP-A- 2014 005 204
- JP-A- H 092 828
- JP-A- H04 325 425
- US-A1- 2003 040 423

## Description

### [Technical Field]

The present invention relates to a method of producing an ultraviolet-resistant quartz glass. In addition, the present invention relates to the use as an optical member for harmonics of a YAG laser.

Priority is claimed on Japanese Patent Application No. 2017-86764, filed April 26, 2017, and Japanese Patent Application No. 2018-009919, filed January 24, 2018.

### [Background Art]

In the related art, carbon dioxide gas lasers have mainly been used for laser processing for cutting and drilling metals, ceramics, and glass using a high output laser beam. With the refinement of processing, use of laser beams with a shorter wavelength has begun, and YAG laser harmonics have gained attention as a light source for an ultraviolet-laser processing machine. In YAG lasers, an oscillation fundamental wavelength is 1,064 nm, but the second harmonic (532 nm), the third harmonic (355 nm), the fourth harmonic (266 nm), and the like are wavelength-converted and used for processing. Currently, the second and third harmonics are mainstream. However, the fourth harmonic is also put into practical use due to processing efficiency and low processing degradation, and in the future, the wavelength will be shortened in the fifth harmonic.

Generally, a synthetic quartz glass is used for an optical member which is used for controlling light of a processing machine using higher-order harmonics subsequent to the second harmonic of a YAG laser and beam shaping. This is because the synthetic quartz glass has excellent durability with respect to damage and transmittance. However, at higher-order harmonic wavelengths, the durability is not sufficient even in the synthetic quartz glass. It has been found that problems occur if the synthetic quartz glass is used without change in an optical system for a YAG third harmonic laser or higher harmonic laser.

Regarding a method of producing an ultraviolet-resistant quartz glass, for example, a method in which a synthetic quartz glass with a low impurity concentration is produced and oxygen molecules in the glass are then removed (PTL 1), a method in which hydrogen molecules are doped and ultraviolet light is then emitted (PTL 2), a method in which fluorine is doped (PTL 3), and the like have been proposed. Methods to produce silica glass via plasma arc melting of silica powder are disclosed e.g. in EP2070883 and US2003/040423.

[PTL 1] Japanese Patent Application Publication No. H04-097922
[PTL 2] Japanese Patent Application Publication No. H09-124337
[PTL 3] Japanese Patent Application Publication No. 2004-217506

### [Summary of Invention]

### [Technical Problem]

In any of the methods, in a general method of producing a material, it is essential to add a new process, and the processes become complicated and costs increase. In addition, ultraviolet-resistance of the quartz glass is not sufficient.

The present invention provides an ultraviolet-resistant quartz glass having durability with respect to a harmonic laser which is more excellent than that of a synthetic quartz glass optical material described in PTL 3 and a method of producing the same. In addition, the present invention provides the use of an optical member for harmonics of a YAG laser.

### [Solution to Problem]

The inventors found that a quartz glass obtained using a synthetic silica powder as a raw material and melting it is a quartz glass having excellent ultraviolet-resistance, and particularly, it has high durability with respect to a fourth harmonic (266 nm) of a YAG laser.

In addition, the inventors found that a quartz glass obtained using a silica powder as a raw material and arc plasma melting it is a quartz glass having excellent ultraviolet-resistance, and particularly, it has high durability with respect to a fourth harmonic (266 nm) of a YAG laser.

The present invention is as defined in the appended claims.

### [Advantageous Effects of Invention]

According to the present invention, it is possible to provide a quartz glass having excellent ultraviolet-resistance. In particular, the quartz glass provided has high durability against the fourth harmonic (266 nm) of a YAG laser. In addition, the quartz glass provided exhibits high durability against the fourth harmonic (266 nm) of the YAG laser with different frequencies.

### [Description of Embodiments]

### <Method of producing an ultraviolet-resistant quartz glass>

A first aspect of the present invention relates to a method of producing an ultraviolet-resistant quartz glass comprising melting a synthetic silica powder obtained by a specific production method.

In the method of the present invention, the synthetic silica powder is melted using arc plasma melting.

The synthetic silica powder used in the first aspect of the present invention is a silica powder with a low impurity concentration, and for example, the concentration of alkali metals such as lithium, sodium and potassium, alkaline earth metals such as magnesium and calcium, and metals such as aluminum, iron, and copper is low, and the concentration of each metal is less than 0.1 ppm, more preferably less than 0.05 ppm, and most preferably less than 0.01 ppm. Most preferably, the concentration is substantially 0 ppm, and in practice, the lower limit is larger than 0 ppm. In addition, in the synthetic silica powder, the OH group concentration is preferably low, and for example, an OH group concentration of less than 100 ppm, and preferably less than 50 ppm, is preferable in order to obtain a quartz glass with a low OH group concentration. A lower OH group concentration is preferable, and most preferably, the OH group concentration is substantially 0 ppm, and in practice, the lower limit is larger than 0 ppm. In addition, the synthetic silica powder is amorphous.

The synthetic silica powder is (i) a synthetic silica powder obtained by preparation according to a sol-gel method using an alkoxysilane as a raw material, or (ii) a synthetic silica powder obtained by hydrolyzing a silicon halide. (i) In the sol-gel method using an alkoxysilane as a raw material, a synthetic silica powder is obtained by preparing a gel in a solution from an alkoxysilane, drying it and sintering it into a glass and a powder form. For example, the method described in Japanese Patent Application Publication No. S62-176928, or Japanese Patent Application Publication No. H03-275527 can be referred to. (ii) The method of hydrolyzing a silicon halide is, for example, a method of hydrolyzing silicon tetrachloride and then drying it and forming it into a powder. For example, a synthetic silica powder is obtained with reference to the method described in Japanese Examined Patent Publication No. H04-75848. Also disclosed herein is fumed silica obtained due to a gas phase reaction such as flame hydrolysis of a silicon compound. For example, methods described in Japanese Patent No. 4548625 and Japanese Patent Application Publication No. 2001-220157 can be referred to.

In order to melt synthetic silica powder, for example, oxyhydrogen burner melting, arc plasma melting or electric furnace melting can be performed. Methods of melting a synthetic silica powder are broadly classified into two types including melting by flame and melting by electricity. Oxyhydrogen burner melting belongs to melting by flame. A synthetic silica powder raw material is supplied and melted in an oxyhydrogen flame. Arc plasma melting and electric furnace melting (using a crucible) are melting by electricity. Arc plasma melting is melting by electricity using arc discharging generated by applying a voltage between electrodes. Electric furnace melting (using a crucible) is, for example, a method of heating and melting a synthetic silica powder raw material in a carbon mold in an electric heater. The melting by electricity is preferable to melting by flame because the OH group concentration in the obtained quartz glass is low.

Oxyhydrogen burner melting is for example the method described in Japanese Patent Application Publication No. 2006-8452, because a quartz glass with a reduced impurity concentration can be obtained. Examples of arc plasma melting include the method described in Japanese Patent Application Publication No. H04-325425. For electric furnace melting (using a crucible), an existing method can be used without change.

Also disclosed herein is a production method using silica powder which is not particularly limited, and is preferably either synthetic silica powder or natural quartz powder because it has a low impurity concentration. The synthetic silica powder is the same as disclosed above. Natural quartz powder is prepared by pulverizing natural quartz. The natural quartz powder has different types and concentrations of impurities depending on the quartz that is used as a raw material. In consideration of a raw material for a quartz glass with high ultraviolet-resistance, a low impurity concentration is preferable, and particularly, the concentration of metal impurities (for example, sodium, calcium, or iron) which affect ultraviolet-resistance is preferably 1 ppm or less, and more preferably 0.1 ppm or less for each element. However, since aluminum is present at a site of silicon in the framework structure of natural quartz in place of silicon, it is difficult to reduce it to a concentration lower than that of gemstone, and aluminum is generally contained in about 10 ppm. However, it is known that aluminum present in a framework structure does not significantly affect ultraviolet-resistance.

Arc plasma melting is used in the present invention and is, as described above, melting by electricity using arc discharging generated by applying a voltage between electrodes, and in the present invention, for example, an existing method described in Japanese Patent Application Publication No. H04-325425 can be used.

The OH group concentration of the quartz glass obtained by the production methods disclosed above is preferably, for example, 500 ppm or less in order to obtain high ultraviolet-resistance, and more preferably 100 ppm or less, and most preferably less than 100 ppm. A lower OH group concentration is preferable, and most preferably the OH group concentration is substantially 0 ppm, and in practice, the lower limit is larger than 0 ppm.

The quartz glass obtained by the production methods disclosed above has resistance with respect to harmonics of a YAG laser. The harmonic of the YAG laser is a third harmonic, a fourth harmonic or a fifth harmonic.

### <Ultraviolet-resistant quartz glass>

The ultraviolet-resistant quartz glass **used in** the present invention is an ultraviolet-resistant quartz glass having an "ultraviolet-resistance" of 6,000 seconds or longer. The "ultraviolet-resistance" is defined as an emission time until the transmittance falls to 3% when the initial transmittance at a light path length of 30 mm is set as 100% and a YAG laser (emission conditions: a YAG laser output of 180 mW, a pulse width of 20 nsec, and a frequency of 80 kHz) using the fourth harmonic (266 nm) is emitted.

The ultraviolet-resistant quartz glass used in the present invention is produced by the production method of the first aspect of the present invention. The ultraviolet-resistance of the ultraviolet-resistant quartz glass is 6,000 seconds or longer. A higher ultraviolet-resistance is more preferable, and the practical upper limit is 15,000 seconds and preferably 20,000 seconds, but this is not intended to limit the present invention.

The OH group concentration of the ultraviolet-resistant quartz glass is preferably 500 ppm or less in consideration of ultraviolet-resistance, and the OH group concentration is more preferably 300 ppm or less, still more preferably 100 ppm or less, still more preferably less than 100 ppm, still more preferably 50 ppm or less, and most preferably 30 ppm or less. A lower OH group concentration is more preferable, and most preferably, the OH group concentration is substantially 0 ppm, and the practical lower limit is larger than 0 ppm.

The ultraviolet-resistant quartz glass used in the present invention contains substantially no fluorine. As described above, in the production method according to the first aspect, the quartz glass is prepared by melting a synthetic silica powder with a low impurity concentration so that contaminants mixed in during melting can be reduced and the impurity concentration can be reduced. In addition, no fluorine is added as an additive. In the second production method disclosed herein, a silica powder containing no fluorine is used as a raw material, and there is no process of adding fluorine to a quartz glass in a production process, and thus the quartz glass contains substantially no fluorine.

### <Optical member>

The present invention includes the use of an optical member for harmonics of a YAG laser, which is made of the quartz glass obtained with the method of the present invention. The optical member is a filter, a prism, a lens or the like. In the present invention harmonics of a YAG laser are a fourth harmonic and a fifth harmonic. The optical member has excellent durability for harmonics of a YAG laser.

### [Examples]

The present invention will be described below in more detail with reference to examples. However, the examples are only examples of the present invention, and the present invention is not limited to the examples.

Examples 1 to 4 and Comparative Examples 1 to 4

Samples 4 to 6 and 8 were prepared as Examples 1 to 4, and Samples 1 to 3 and 7 were prepared as Comparative Examples 1 to 4.

Sample 1: Silicon tetrachloride was used as a raw material, and a quartz glass ingot was produced by a direct method. The raw material was supplied from a central tube of a quartz glass burner, H₂ gas and O₂ gas were supplied from an outer tube of the burner, silica fine particles were synthesized due to a dehydration condensation reaction, and deposited on a target, and at the same time, formed into a transparent glass to obtain an ingot. The ingot was processed into a 30 mm cube and used as an evaluation sample.

Sample 2: A sample produced under the same conditions as in Sample 1 except that silicon tetrafluoride was used as a raw material was used as Sample 2.

Sample 3: Silicon tetrachloride was used as a raw material and a quartz glass ingot was produced by a soot method. The raw material was supplied from a central tube of a quartz glass burner, and H₂ gas and O₂ gas were supplied from an outer tube of the burner to synthesize a soot product. The soot product was heated in a 1 vol% silicon tetrafluoride gas (the remainder was He gas) atmosphere at 1,200°C for 5 hours. Then, a heat treatment was performed in a 100% He gas atmosphere at 1,500°C for 5 hours to obtain a transparent ingot. The ingot was processed into a 30 mm cube and used as an evaluation sample.

Sample 4: A synthetic silica powder was used as a raw material, melted in an oxyhydrogen burner, and deposited in a container composed of refractory bricks and a quartz glass ingot was produced. The ingot was processed into a 30 mm cube and used as an evaluation sample.

Sample 5: A synthetic silica powder was used as a raw material, an arc plasma was generated between a cathode torch and an anode torch, a raw material powder was introduced into the plasma and melted and then deposited on a target, and a quartz glass ingot was produced. The ingot was processed into a 30 mm cube and used as an evaluation sample.

Sample 6: A synthetic silica powder was used as a raw material, a raw material powder was filled into a carbon mold, and the mold was then set in an electric furnace, a raw material powder was melted in a nitrogen atmosphere at 1,800°C in an electric furnace, and a quartz glass ingot was produced. The ingot was processed into a 30 mm cube and used as an evaluation sample.

Sample 7: A sample produced under the same conditions as in Sample 4 except that a natural quartz powder was used as a raw material was used as Sample 7.

Sample 8: A sample produced under the same conditions as in Sample 5 except that a natural quartz powder was used as a raw material was used as Sample 8.

The synthetic silica powders used in Samples 4 to 6 were MKC powders (commercially available from Nihon Kasei CO., LTD.) produced by a sol-gel method using an alkoxysilane (tetramethoxysilane Si(OC₂H₅)₄ or the like) as a raw material. The impurity analysis results of MKC powder are shown in Table 1. The impurity analysis result of Sample 4 and the impurity analysis result of natural quartz powder are also shown in Table 1.

**[Table 1]**

| Impurity concentration (ppm) | | | | | | | | |
|---|---|---|---|---|---|---|---|---|
| Element | Li | Na | Mg | Al | K | Ca | Fe | Cu |
| Natural powder | 0.2 | 0.2 | 0.1 | 8 | 0.1 | 0.7 | 0.2 | <0.01 |
| Synthetic powder | <0.01 | <0.01 | <0.01 | 0.01 | <0.01 | <0.01 | 0.03 | <0.01 |
| Sample 4 | <0.01 | 0.3 | <0.01 | 0.7 | <0.01 | <0.01 | 0.05 | <0.01 |

### Ultraviolet-resistance test method

The ultraviolet-resistance of the sample quartz glass was requested toLaser lab Inc. and evaluated according to change in the transmittance when a YAG laser (emission conditions: a YAG laser output of 180 mW, a pulse width of 20 nsec, and a frequency of 80 kHz) using the fourth harmonic (266 nm) was emitted. The resistance was evaluated as an emission time until the transmittance fell to 3% when the initial transmittance at a light path length of 30 mm was set as 100%. The results are shown in Table 2. Examples 1, 3 and 4 are not according to the invention.

**[Table 2]**

| Sample | Raw material | Production method | OH group concentration ppm | Resistance sec | Relative evaluation |
|---|---|---|---|---|---|
| 1 (Comparative Example 1) | Silicon tetrachloride | Oxyhydrogen burner melt | 1,040 | 750 | 1.0 |
| 2 (Comparative Example 2) | Silicon tetrafluoride | Oxyhydrogen burner melt | 820 | 850 | 1.1 |
| 3 (Comparative Example 3) | Silicon tetrachloride | Soot synthesis + F doped | 270 | 1,350 | 1.8 |
| 4 (Example 1) | Synthetic silica powder | Oxyhydrogen burner melt | 230 | 2,700 | 3.6 |
| 5 (Example 2) | Synthetic silica powder | Plasma melt | 15 | 7,100 | 9.5 |
| 6 (Example 3) | Synthetic silica powder | Electric melt | 8 | 3,050 | 4.1 |
| 7 (Comparative Example 4) | Natural quartz powder | Oxyhydrogen burner melt | 210 | 2,200 | 2.9 |
| 8 (Example 4) | Natural quartz powder | Plasma melt | 20 | 5,100 | 6.8 |

Comparing Examples 1 to 3 and Comparative Examples 2 and 3, it was found that an ultraviolet-resistant quartz glass could be produced by melting a synthetic silica powder containing no fluorine. In addition, comparing Example 2 and Example 1 and comparing Example 4 and Comparative Example 4, it was found that, when silica powder containing no fluorine was used as a raw material, if the raw material was the same, it was possible to produce a quartz glass having better ultraviolet-resistance in plasma melting as compared with oxyhydrogen burner melting.

### Frequency dependence

For Examples 1, 2, and 4 and Comparative Examples 1 and 4, the frequency dependence was evaluated by changing the frequency of the laser. The results are shown in Table 3.

Examples 2 and 4 exhibited high resistance regardless of the frequency, and Example 1 also exhibited relatively high resistance.

**[Table 3]**

| Sample | Frequency (kHz) | | | | | |
|---|---|---|---|---|---|---|
| | 30 | | 80 | | 120 | |
| | Resistance (sec) | Relative evaluation | Resistance (sec) | Relative evaluation | Resistance (sec) | Relative evaluation |
| 1 (Comparative Example 1) | 740 | 1.0 | 750 | 1.0 | 1,650 | 1.0 |
| 4 (Example 1) | 2,150 | 2.9 | 2,700 | 3.6 | 5,600 | 3.4 |
| 5 (Example 2) | 4,000 | 5.4 | 7,100 | 9.5 | 16,900 | 10.2 |
| 7 (Comparative Example 4) | 1,900 | 2.6 | 2,200 | 2.9 | 4,850 | 2.9 |
| 8 (Example 4) | 3,600 | 4.9 | 5,100 | 6.8 | 12,200 | 7.4 |

### [Industrial Applicability]

The present invention is beneficial in fields related to a quartz glass having excellent ultraviolet-resistance.

## Claims

1. A method of producing an ultraviolet-resistant quartz glass used for a fourth harmonic or a fifth harmonic of an YAG laser, said method consisting of preparing a synthetic silica powder (i) according to a sol-gel method using an alkoxysilane as a raw material or (ii) by hydrolyzing a silicon halide and arc plasma melting of the synthetic silica powder to obtain the quartz glass, wherein the concentration of each metal impurity in said synthetic silica powder is less than 0.1 ppm and said quartz glass has an ultraviolet-resistance of 6,000 seconds or longer, wherein said ultraviolet-resistance is an emission time until the transmittance falls to 3%, when the initial transmittance at a light path length of 30 mm is set as 100% and a YAG laser with the following emission conditions: a YAG laser output of 180 mW, a pulse width of 20 ns, and a frequency of 80 kHz using the fourth harmonic of 266 nm)is emitted.

2. The method according to claim 1, wherein the OH group concentration of the quartz glass is less than 100 ppm.

3. Use of an optical member for a fourth harmonic or a fifth harmonic of a YAG laser, wherein the optical member consists of an ultraviolet-resistant quartz glass having an ultraviolet-resistance of 6,000 seconds or longer, said ultraviolet-resistance is an emission time until the transmittance falls to 3%, when the initial transmittance at a light path length of 30 mm is set as 100% and a YAG laser with the following emission conditions: a YAG laser output of 180 mW, a pulse width of 20 ns and a frequency of 80 kHz using the fourth harmonic 266 nm is emitted.

4. The use of an optical member according to claim 3, wherein the optical member is used for a fourth harmonic of a YAG laser.

5. The use of an optical member according to claim 3 or 4, wherein the OH group concentration of the quartz glass is less than 100 ppm.

6. The use of an optical member according to any one of claims 3-5, wherein the quartz glass contains substantially no fluorine.

## Patentansprüche

1. Verfahren zum Herstellen eines UV-beständigen Quarzglases, das für eine vierte Oberschwingung oder eine fünfte Oberschwingung eines YAG-Lasers verwendet wird, wobei das Verfahren aus dem Zubereiten eines synthetischen Silicapulvers (i) nach einem Sol-Gel-Verfahren unter Verwendung eines Alkoxysilans als Rohmaterial oder (ii) durch Hydrolysieren eines Siliziumhalids sowie aus dem Bogenplasmaschweißen des synthetischen Silicapulvers besteht, um das Quarzglas zu erhalten, wobei die Konzentration jeder Metallunreinheit in dem synthetischen Silicapulver geringer als 0,1 ppm ist und das Quarzglas eine UV-Beständigkeit von 6.000 Sekunden oder länger aufweist, wobei die UV-Beständigkeit eine Emissionszeit ist, bis die Transmission auf 3 % sinkt, wenn die anfängliche Transmission bei einer Lichtpfadlänge von 30 mm als 100 % und ein YAG-Laser mit den folgenden Emissionsbedingungen festgelegt ist: es wird eine YAG-Laser-Ausgabe von 180 mW, einer Pulsbreite von 20 ns und einer Frequenz von 80 kHz unter Verwendung der vierten Oberschwingung von 266 nm emittiert.

2. Verfahren nach Anspruch 1, wobei die OH-Gruppen-Konzentration des Quarzglases geringer als 100 ppm ist.

3. Verwendung eines optischen Elements für eine vierte Oberschwingung oder eine fünfte Oberschwingung eines YAG-Lasers, wobei das optische Element aus einem UV-beständigen Quarzglas besteht, das eine UV-Beständigkeit von 6.000 Sekunden oder länger aufweist, wobei die UV-Beständigkeit eine Emissionszeit ist, bis die Transmission auf 3 % sinkt, wenn die anfängliche Transmission bei einer Lichtpfadlänge von 30 mm als 100 % und ein YAG-Laser mit den folgenden Emissionsbedingungen festgelegt ist: es wird eine YAG-Laser-Ausgabe von 180 mW, einer Pulsbreite von 20 ns und einer Frequenz von 80 kHz unter Verwendung der vierten Oberschwingung von 266 nm emittiert.

4. Verwendung eines optischen Elements nach Anspruch 3, wobei das optische Element für eine vierte Oberschwingung eines YAG-Lasers verwendet wird.

5. Verwendung eines optischen Elements nach Anspruch 3 oder 4, wobei die OH-Gruppen-Konzentration des Quarzglases geringer als 100 ppm ist.

6. Verwendung eines optischen Elements nach einem der Ansprüche 3-5, wobei das Quarzglas im Wesentlichen kein Fluor enthält.

## Revendications

1. Procédé de fabrication d'un verre de quartz résistant aux ultraviolets utilisé pour une quatrième harmonique ou une cinquième harmonique d'un laser YAG, ledit procédé consistant à préparer une poudre de silice synthétique (i) selon un procédé sol-gel utilisant un alkoxysilane comme matière première ou (ii) par hydrolyse d'un halogénure de silicium et fusion à l'arc plasma de la poudre de silice synthétique afin d'obtenir le verre de quartz, dans lequel la concentration de chaque impureté métallique dans ladite poudre de silice synthétique est inférieure à 0,1 ppm et ledit verre de quartz présente une résistance aux ultraviolets d'au moins 6 000 secondes, dans lequel ladite résistance aux ultraviolets correspond à une durée d'émission jusqu'à ce que la transmittance chute à 3 %, lorsque la transmittance initiale, pour une longueur de trajet optique de 30 mm, est fixée à 100 % et qu'un laser YAG est émis avec les conditions d'émission suivantes : un laser YAG avec une puissance de sortie de 180 mW, une largeur d'impulsion de 20 ns et une fréquence de 80 kHz, utilisant la quatrième harmonique de 266 nm.

2. Procédé selon la revendication 1, dans lequel la concentration en groupes OH du verre de quartz est inférieure à 100 ppm.

3. Utilisation d'un élément optique pour une quatrième harmonique ou une cinquième harmonique d'un laser YAG, dans laquelle l'élément optique est constitué d'un verre de quartz résistant aux ultraviolets présentant une résistance aux ultraviolets d'au moins 6 000 secondes, ladite résistance aux ultraviolets correspondant à une durée d'émission jusqu'à ce que la transmittance chute à 3 %, lorsque la transmittance initiale, pour une longueur de trajet optique de 30 mm, est fixée à 100 % et qu'un laser YAG est émis avec les conditions d'émission suivantes : un laser YAG avec une puissance de sortie de 180 mW, une largeur d'impulsion de 20 ns et une fréquence de 80 kHz, utilisant la quatrième harmonique de 266 nm.

4. Utilisation d'un élément optique selon la revendication 3, dans laquelle l'élément optique est utilisé pour une quatrième harmonique d'un laser YAG.

5. Utilisation d'un élément optique selon la revendication 3 ou 4, dans laquelle la concentration en groupes OH du verre de quartz est inférieure à 100 ppm.

6. Utilisation d'un élément optique selon l'une quelconque des revendications 3-5, dans laquelle le verre de quartz ne contient pratiquement pas de fluor.
